Europäisches Patentamt

European Patent Office

Office européen des brevets

(11) Publication number: 0 249 049
A1

## (12) EUROPEAN PATENT APPLICATION

(21) Application number: 87107034.8

(22) Date of filing: 15.05.87

(51) Int. Cl.⁴: **G21F 9/12 , C02F 9/00**

(30) Priority: 10.06.86 IL 79090

(43) Date of publication of application:
16.12.87 Bulletin 87/51

(84) Designated Contracting States:
BE CH DE ES FR GB IT LI NL

(71) Applicant: **Amit, Noach**
**20 Disraeli St.**
**Haifa(IL)**

Applicant: **Amit, Uri**
**Post Migdal Haemek**
**Timrat(IL)**

Applicant: **Frommer, Moshe A., Dr,**
**2a, Eisenberg St.**
**Rehovot(IL)**

(72) Inventor: **Amit, Noach**
**20 Disraeli St.**
**Haifa(IL)**
Inventor: **Amit, Uri**
**Post Migdal Haemek**
**Timrat(IL)**
Inventor: **Frommer, Moshe A., Dr,**
**2a, Eisenberg St.**
**Rehovot(IL)**

(74) Representative: **Patentanwälte Dr. Solf & Zapf**
**Zeppelinstrasse 53**
**D-8000 München 80(DE)**

(54) Portable water purifier.

(57) A disposable water purifier consists of two, initially separate, sealed units which, before use, are assembled into a complete through-flow unit. The upper unit (I) contains, starting from the inlet (10), a micro-filter (14), a mixed-bed, nuclear-grade ion-exchange resin in wetted state (16), and another micro-filter (17) upstream of the outlet (12); this unit serves to absorb salts, ionic contaminants and charged particles. The lower unit (II) contains, starting from the inlet (20), a micro-filter (24), a layer of bacterio-static activated carbon (26), and another micro-filter (27) upstream of the outlet (22); this unit serves to absorb organic, non-charged particles and dissolved gases. An indicator (not shown) attached to the outlet serves to indicate exhaustion of the purifying capacity of the unit.

## PORTABLE WATER PURIFIER

### BACKGROUND OF THE INVENTION

The invention relates to a disposable water purifier, particularly to an emergency water purification kit capable of converting a limited quantity of contaminated water into potable water. It further relates to a light-weight device readily carried in a coat-pocket, serving to provide drinking water to a person, especially a soldier, about to enter a contaminated zone, by absolute purfication of water contaminated by nuclear radiation and/or poisonous substances, bacteria, salt or any other contaminants.

Nowadays, with the hazard of warring nations using atomic weapons or poison gas, soil and water may be contaminated for long periods after the event; persons entering the attacked area are, as a matter of fact, protected against radiation and poisonous materials by suitable outer garments, but in addition they must continuously be supplied with drinking water, in order to sustain the heavy effort of the work they are made to carry out.

On the other side, persons working remote from civilized regions with good drinking water and other amenities may be obliged to use water from open wells or reservoirs, which not only contains bacteria, but is often smelly and of unpleasant taste.

In arid or semi-arid countries the only water available may be brackish water with a high content of salts, and since ordinary distilling apparatus cannot be readily carried along, it is of great importance to have a small handy device carried along which will desalinate a relatively small quantity for drinking purposes only. In many instances, such a device may be the only hope for survival, since human beings can sustain themselves without food for longer periods, but not without drinking water.

It is, therefore, the foremost object of the present invention to provide a disposable water purification kit of small dimensions capable of providing from 5 to 50 liters of clean water, depending on the initial water purity.

It is another object of the invention to provide a kit suitable for removing from potable water all harmful materials, such as radio-active, organic and inoraganic toxic contaminants, as well as bad smell and taste.

It is a further object to provide a water purification kit of small weight and small dimensions permitting its being carried by any person venturing into areas containing only contaminated water, and its operation by any person without requiring special skill.

And it is a final object to provide a water purification kit of simple design at low cost with a view to issuing it to every soldier and anybody else forced to stay in a danger zone of the kind described above.

### SUMMARY OF THE INVENTION

The water purification kit of the invention is characterized by that it consists of two initially separate units adapted to be assembled into a complete unit before use within a few seconds: it comprises a first unit serving to purify water containing salts, ionic contamination and charged particles, and a second unit serving to purify water contaminated by organic noncharged particles and dissolved gases. The first unit is in the shape of an oblong container provided at its one end with an inlet opening containing means for connecting it to a water source, e.g. a soldier's canteen, a water tap or any vessel, and at its other end with an outlet opening containing means for connecting it to the second unit. The container is filled, starting from the inlet opening, with a firt micro-filter in the form of a membrane or a tight-woven material, with a mixed-bed, nuclear-grade ion-exchange resin of known composition in wetted state, and with a second micro-filter upstream of the outlet, seving as flow control means. In a preferred embodiment a flexible, inert spacer of a foamed plastic is positioned between the first micro-filter and the ion-exchange resin, serving to separate the two components.

The second unit is in the shape of an oblong container provided at its one end with an inlet opening adapted for connection to the outlet opening of the first unit, and with a purified-water outlet at its other end. It contains essentially, starting from the inlet opening, a first micro-filter, in the form of a membrane or a tightly-woven material, a layer of a strong absorbent as, for instance, bacteriostatic activated carbon, and a second membrane positioned upstream of the outflow opening, serving to control the contact time between the water and the absorbent material.

In a preferred embodiment the second unit also contains a dry disinfectant such as, for instance, potassium hypochloride soaked in a plastic porous spacer, or dispersed in a slow-release or controlled-release form, positioned closed to, and downstream of the first microfilter.

The two uinits are carried by a person in unconnected state, each unit being hermetically sealed, either by plugs closing the openings at the ends off the two containers, or they are sealingly wrapped in plastic envelopes. The sealing means are removed before use, and the two units are jointed so that the initially contaminated water flows through the first unit into the second unit, and from there into a sterile drinking vessel. It is, of course, understood that each unit may be used separately, if the water is either brackish or smelly, but it is advisable to use the combined device in all cases where there exists the slightest doubt.

It is also possible to place the anti-smell unit next to the water source and to attach the brackish-water treating unit to the outlet of the above unit.

The two containers are preferably made of an inert plastic of a wall thickness suitable for withstanding the maximum water pressure to be expected, but the surest method is percolation by gravity.

The water source may be a soldier's canteen, a water tap, or water may be fed to the device from a can through a funnel; the device is advantageously supplied together with adaptors for different kinds of water sources and different forms of water outlets.

As soon as contaminated water is to be purified for drinking purposes, the two units are unwrapped and jointed together, with the outlet of the first unit screwed into the inlet of the second unit. Then the inlet of the first unit is connected - by screw thread or by means of a flexible adaptor -to a water spout, a solider's canteen or any other water supply, and water is made to flow. The device is designed for a through-flow of about 1 liter per 15 minutes, and its total purifying capacity, before it is to be thrown away, lies between 5 and 50 liters, depending on the degree of contamination.

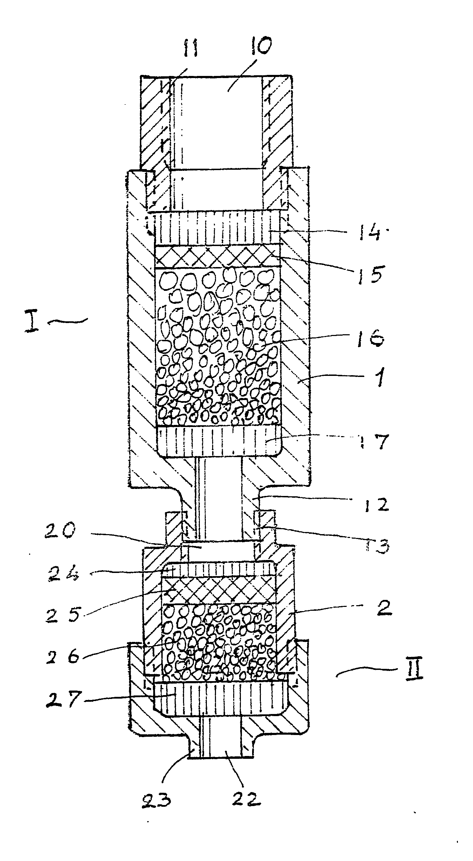

## DESCRIPTION OF THE DEVICE WITH REFERENCE TO THE ACCOMPANYING DRAWING

The water purifying device of the invention is shown in a longitudinal section in the drawing:-it comprises an upper unit I capable of absorbing salts, ionic contamination and charged particles and a lower unit II capable of extracting organic, noncharged particles and dissolved gases from the water, both units in the form of cylindrical containers 1 and 2 respectively, each provided with openings at its both ends. Both containers are preferably injection-molded bodies similarly composed of two parts each interconnected by screw thread, in order to permit insertion of the purifying materials. The upper container 1 has a water inlet opening 10 provided with internal screw thread 11 which, for instance, may cooperate with the outer screw thread of a soldier's canteen. Screw-threaded adaptors (not shown in the drawing) for connection to water taps of different sizes are advantageously supplied together with the device. The other end of the upper unit I is in the form of an outlet spout 12 provided with outer screw thread 13.

The container 2 is shorter than the upper unit 1 and has an inlet opening 20 provided with inner screw thread 21 corresponding to the screw-thread 13 of the upper container. The other, bottom end is open to form and outlet opening 22 in an oulet spout 23.

The upper unit I contains - counting from the top downwards - a micro-filter 14, a flexible, inert spacer of a foamed plastic (15), a filling 16 of a mixed-bed, nuclear-grade ion-exchange resin in wetted state, known to absorb salts, ionic contamination and charged particles, and a second micro-filter 17.

The lower unit II contains - counting from the top downwards - a micro-filter 24, a dry disenfectant soaked in a plastic porous spacer 25 or spread in slow release or controlled-release form, a layer 26 of a strong absorbent such as bacterio-static activated carbon, and a second micro-filter 27, of sufficient flow resistance destined to control the through-flow, i.e. the contact time necessary for purifying the contaminated water. In order not to exceed the water pressure suitable for a given through-flow, it is advisable, in all cases where a canteen or any other vessel is available, to fill the latter with water and to connect it to the purification device in order to obtain through-flow by gravity. On the other hand, the person destined to use the device can be instructed beforehand to open a water tap in such a manner that the purified water leaves the lower unit in single drops only.

It will be understood that the embodiment illustrated and described in the foregoing represents only one example of the possible shape of the two units and their connections, and that various other shapes and connecting means may be employed.

For instance, instead of connecting the various component parts by means of screw thread, they may have smooth contact faces which should be forcefully inserted one into the other, so as to adhere by pure friction of the plastic materials.

With a view to checking the efficiency of the water purifier, it is proposed to attach to its outlet an indicator showing the ionic strength or salinity of the outflowing water. The indicator will change colour as soon as the acting chemicals of the two units - or of one unit - are exhausted, requiring exchange of the purifier unit.

## Claims

1. A disposable water purification device suitable for converting a given quantity of water contaminated by nuclear radiation and/or noxious particles into pure, potable water, the device comprising two initially separate units to be assembled shortly before use, wherein
a first unit serving to purify water containing salts, ionic contamination and charged particles is in the shape of a container having an inlet provided with means for connecting it to a source of contaminated water, and an outlet provided with means for communicatingly connecting it to said second unit, said container being filled, starting from said inlet, with a first micro-filter, a mixed-bed, nuclear-grade, ion-exchange resin in wetted state, and a second micro-filter upstream of said outlet,
a second unit serving to purify water contaminated by organic non-charged particles and dissolved gases, in the shape of a container having an inlet adapted for connection to said outlet of said unit and an outlet for purified water, said container being filled, starting from said inlet, with a third micro-filter, a layer of a strong absorbent as e.g. bacterio-static activated carbon, and a fourth micro-filter upstream of said outlet.

2. The water purification device of Claim 1, wherein said two units are hermetically sealed before their connection for use.

3. The water purification device of Claim 1, wherein said first unit comprises a flexible, inert spacer of a foamed plastic inserted into said container and separating said first micro-filter from said ion-exchange resin.

4. The water purification device of Claim 1, wherein said second unit comprises a dry disenfectant soaked in a porous plastic spacer inserted into said second container and separating said layer of a strong absorbent from said fourth micro-filter.

5. The water purification device of Claim 1, wherein said second unit comprises a dry disenfectant spread in slow-release or controlled-release form.

6. The water purification device of Claim 1, comprising two containers made from an inert plastic.

7. The water purification device of Claim 6, comprising a screw-thread-connection of said two containers.

8. The water purification device of Claim 6, wherein each said container is manufactured from two parts permitting insertion of said filling materials.

9. The water purification device of Claim 1, wherein said inlet opening of said first container is screw-threaded corresponding to the screw-thread on a soldier's water canteen.

10. The water purification device of Claim 1, supplied with adaptors for connection to different kinds of water supply oulets.

11. The water purification device of Claim 1, characterized by its small weight and dimensions, permitting its being carried in a coat pocket.

12. The water purification device of any of the preceding Claims characterized by the design of at least said fourth microfilter in a manner defining the contact time of the contaminated water with said chemicals contained in both said units.

13. The water purification device of Claim 12, adapted for through-flow by gravity.

14. The water purification device of Claim 1, comprising a colour indicator attached to the outlet of said second opening.

15. The water purication device substantially as hereinbefore described and illustrated in the accompanying drawing.

0 249 049

M 963 EPA/nn

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 169 302 (WILHELM KOPP) <br> * Claims 1,2 * | 1 | G 21 F 9/12 <br> C 02 F 9/00 |
| A | | 7,9 | |
| | --- | | |
| Y | US-A-4 298 475 (GARTNER) <br> * Claim 1; column 2, lines 36-53 * | 1,6,13 | |
| | --- | | |
| Y | GB-A-2 146 980 (EVANS) <br> * Claims 1,4 * | 1,6,13 | |
| | --- | | |
| Y | DE-A-1 517 508 (BERKEFELD) <br> * Claims 1,2,4 * | 1,6,13 | |
| A | | 4 | TECHNICAL FIELDS SEARCHED (Int. Cl.4) |
| | --- | | G 21 F <br> C 02 F |
| A | US-A-3 633 748 (HANLEY) <br> * Claims 1,4 * | 1 | |
| | ----- | | |

The present search report has been drawn up for all claims

| Place of search | Date of completion of the search | Examiner |
|---|---|---|
| THE HAGUE | 23-07-1987 | NICOLAS H.J.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82